# EUROPEAN PATENT SPECIFICATION

(11) **EP 3 288 367 B1**
(45) Date of publication and mention of the grant of the patent: **27.11.2019**
(21) Application number: 16786049.3
(22) Date of filing: 29.04.2016
(51) Int. Cl.: A01G 13/02, C09K 17/52, D21H 13/06, D21H 27/00, C08B 3/00, C08L 1/26, C09K 17/32, D01F 2/28, D21H 13/08

(54) **A GROUND COVER MULCH COMPRISING CELLULOSE CARBAMATE**
BODENBELAGSMULCH MIT CELLULOSECARBAMAT
PAILLAGE FORMANT COUVERTURE DE SOL, COMPRENANT DU CARBAMATE DE CELLULOSE

(30) Priority: 29.04.2015 SE 1550516
(43) Date of publication of application: 07.03.2018
(73) Proprietor: Stora Enso Oyj, 00101 Helsinki (FI)
(72) Inventor: BACKFOLK, Kaj, 531 30 Lappeenranta (FI); SAXELL, Heidi, 112 19 Stockholm (SE); RANTAMÄKI, Paula, 131 71 Nacka (SE)
(74) Representative: Forsberg, Anna Karin
(86) International application number: PCT/IB2016/052429
(87) International publication number: WO 2016/174619

(56) References cited:
- WO-A1-03/064476
- WO-A2-2012/101329
- CN-A- 1 702 100
- JP-A- 2003 238 601
- JP-A- 2003 335 898
- US-A- 5 861 506
- US-A- 5 937 573
- US-A1- 2005 234 229
- US-A1- 2009 259 032
- US-B1- 6 362 330

## Description

### Field of invention

The present invention relates to a ground cover mulch comprising cellulose carbamate (CCA). Also methods for its manufacture and use thereof are disclosed together with use of CCA.

### Background

In CN101871167 it is disclosed a preparation method of antibacterial cellulose fabric, belonging to the technical field of fiber fabric modification. The preparation process comprises the following steps of: dipping the fiber fabric with urea solution, and baking for a period of time at 132-170° C to generate carbamic acid ester group on the surface of the fiber fabric; washing in water, rinsing by using hypohalous acid salt water solution, reacting the carbamic acid ester group on the surface of the fiber fabric with hypochlorite to generate N-halamine structure with strong oxidability, and therefore, the cellulose fabric is said to have an antibacterial function. The prepared antibacterial fabric is said to have a broad spectrum antibacterial function, and sterilized cellulose fabric may obtain the antibacterial function again after rinsing by using the hypohalous acid salt water solution

In WO2007135245 a method is disclosed for imparting microbiostatic properties to a polysaccharide or to a polysaccharide-containing product by introducing covalently bound carbamate groups in the polysaccharide chain. The polysaccharide may be in isolated form or included in a complex structure. In particular, the disclosure relates to the use of cellulose carbamate (CCA) for producing microbiostatic material. Such material may be in the form of fibers or films, or as a wood product treated in order to achieve anti-rot properties.

Thus CCA has been claimed to have certain antimicrobial properties, whereas the effects are not clear; as set out above in CN101871167A and WO07135245A1, respectively. It must be pointed out, that in most cases either the carbamate group is washed away during regeneration or then easily removed from the cellulose during the processing step. In the present invention, we have found that it is preferable that high amounts of urea is remaining in the product and that the amount of carbamate group should be high (thus meaning less washing).

In WO2008052913A1 it is also disclosed a method and device for protecting crop plants wherein also carbamate compounds are disclosed. The meshed fabric disclosed therein may further contain cellulose.

In WO2012101329 it is also disclosed a ground-cover mulch, which includes a web-formed vegetable fibre-bearing pulp, and wood distillate. The wood distillate includes birch-wood distillate. In addition, the disclosure also relates to a method for manufacturing a ground-cover mulch and the use of birch-wood distillate in ground-cover-mulch applications.

To summarize the background art shows that paper mulches has been investigated and used to a large extent. However, industrial use of paper or cellulose films is usually limited by costs and by limited biodegradability. Various components may be added to paper surface to adjust and control its properties, but it usually adds a lot of costs. There is therefore a need to solve one or more of the above problems.

The present invention addresses the problems of degradable paper based mulches. Due to wet conditions and high microbe contents in the soil, bio-based mulches such as paper needs to be treated in order to provide controlled rate of degradation. At the same time, the paper mulch or biofilm must be eco-friendly and have certain physical properties and be durable against water and wind. There is thus a need for an improved mulch. It has now surprisingly been found, that by using cellulose carbamate, preferably in fiber form and/or in film form, a mulch can be provided with such properties that solves one or more of the problems connected with cellulose based mulches.

### Summary of Invention

The present invention thus solves one or more of the above problems, by providing according to a first aspect a ground cover mulch which includes a paper substrate originating from vegetable fibre-bearing pulp which has been web-formed, wherein it also comprises a cellulose carbamate.

Also provided according to a second aspect of the invention is a method for manufacturing a mulch according to the first aspect comprising the following steps:
a) providing a paper substrate originating from vegetable fibre-bearing pulp which has been web-formed, and
b) applying on said paper substrate cellulose carbamate, optionally preceded by a filler addition step, which may already be in the web-forming process.

Also provided according to a third aspect of the invention is a method for manufacturing a mulch according to the first aspect comprising the following steps:
c) providing a never-dried pulp or dried pulp, and
d) adding cellulose carbamate either at the wet end of a paper/board production line, or through surface sizing, or through coating, or through spraying, or through dusting in said line, optionally combined by adding one or more fillers, and optionally other functional chemicals such as strength additives, UV absorbents, hydrophobic agents, retention chemicals, biocides and nutrients.

Also provided according to a fourth aspect of the invention is the use of cellulose carbamate in a mulch, preferably according to the first aspect.

Also provided according to a fifth aspect of the invention is use of a mulch according to the first aspect or fourth aspect in cultivation.

### Detailed description of the invention

It is intended throughout the present description that the expression "cellulose carbamate" embraces any cellulose carbamate that could be useful in a mulch context. The term CCA is also used interchangeably with said expression in the present disclosure.

The pulp mentioned in the present description, may be chemical pulp, mechanical pulp, thermomechanical pulp or chemi(thermo)mechanical pulp (CMP or CTMP). Said chemical pulp is preferably a sulphite pulp or a kraft pulp.

The pulp may consist of pulp from hardwood, softwood or both types. The pulp may e.g. contain a mixture of pine and spruce or a mixture of birch and spruce. The chemical pulps that may be used in the present invention include all types of chemical wood-based pulps, such as bleached, half-bleached and unbleached sulphite, kraft and soda pulps, and mixtures of these. The pulp may be of dissolved type. The pulp may also comprise textile fibers. The pulp may also come from agriculture (e.g. potato, bamboo or carrot). The pulp may also be nanopulp (MFC). Also combinations of said pulp types are possible in the context of the present invention. The pulp may also contain synthetic fibers or biofibers such as PLA (Poly-lactic acid).

According to a further preferred embodiment of the product, i.e. the mulch, according to the first aspect of the invention contains additionally one or more fillers, such as a black filler, preferably carbon black, most preferred combined with a filler selected from the group comprising calcium carbonate, fly ash, talc, kaolin, precipitated carbonate, silica and aluminium oxides.

According to a further preferred embodiment of the first aspect of the invention the cellulose carbamate is present in the form of a continuous or discontinuous film, particles or a fiber, preferably when in fiber form with a fiber length less than about 100 mm, most preferred less than about 50 mm. When the cellulose carbamate is present in the form of a film or a fiber, preferably when in fiber form, the fiber length may also be less than about 10 mm, most preferred less than about 5 mm.

According to a further preferred embodiment of the first aspect of the invention the cellulose carbamate also may be fibrillated.

According to a further preferred embodiment of the first aspect of the invention the carbon black emanates from a non-fossil source, preferably from biomass or organic waste residues of non-fossil origin.

According to a further preferred embodiment of the method according to the second aspect the fibre-bearing pulp which has been web-formed, has been made with a dry or wet laid process, preferably a wet laid process in which the cellulose carbamate has been added.

According to a further preferred embodiment of the method according to the third aspect the cellulose carbamate is added in the form of cellulose carbamate fibers, preferably with a fiber length less than about 100 mm, most preferred less than about 50 mm.

According to a further preferred embodiment of the method according to the third aspect the cellulose carbamate is added in the form of a film.

According to a further preferred embodiment of the method according to the third aspect spun fibers of regenerated cellulose carbamate are added as a reinforcement fiber or thread in the mulch.

Other techniques for obtaining a mulch according to the present invention could be e.g. through spinning. The CCA may be dosed in a paper machine (at the wet end) together with other chemicals, which may be normal fibers, process chemicals, etc. Most preferable, the CCA contains N-molecules and thus bears a higher bioactivity. It may in addition be possible to have low and high amounts of the filler(s). The CCA may further be present in other shapes/forms such as hollow fibers, fibrillated fibers, nanofibers, flat fibers and micronized fiber (with low aspect ratio).

The mulch according to the present invention may be regenerated product and the CCA may be in form of fibers or films or as a composite on top on e.g. bioplastics or paper. The final product may as set out earlier preferably contain a filler, e.g. a dark filler which provides a colored version. The regenerated substrate may also, which is preferred, have sufficient wet strength and mechanical properties which is sufficient for industrial agriculture.

It should also be mentioned that CCA has bioactive characteristics and thus provides the mulch with features that it becomes less prune to degradation and can also better stand firm against an attack from microorganisms.

## Claims

1. A ground cover mulch which includes a paper substrate originating from vegetable fibre-bearing pulp which has been web-formed, **characterized in that** also comprises a cellulose carbamate.

2. A mulch according to claim 1 containing additionally one or more fillers, such as a black filler, preferably carbon black, most preferred combined with a filler selected from the group comprising calcium carbonate, fly ash, talc, kaolin, precipitated carbonate, silica and aluminium oxides.

3. A mulch according to claim 1 or 2 wherein the cellulose carbamate is present in the form of a continuous or discontinuous film, particles or a fiber, preferably when in fiber form with a fiber length less than about 100 mm, most preferred less than about 50 mm.

4. A mulch according to claim 3 wherein the cellulose carbamate also is fibrillated.

5. A mulch according to claim 2 wherein the carbon black emanates from a non-fossil source, preferably from biomass or organic waste residues of non-fossil origin.

6. Method for manufacturing a mulch according to any one of the preceding claims 1 - 5 comprising the following steps:
a) providing a paper substrate originating from vegetable fibre-bearing pulp which has been web-formed, and
b) applying on said paper substrate cellulose carbamate, optionally preceded by a filler addition step, which may already be in the web-forming process.

7. Method for manufacturing a mulch according to claim 6 wherein the fibre-bearing pulp which has been web-formed, has been made with a dry or wet laid process, preferably a wet laid process in which the cellulose carbamate has been added.

8. Method for manufacturing a mulch according to any one of the preceding claims 1 - 5 comprising the following steps:
c) providing a never-dried pulp or dried pulp, and
d) adding cellulose carbamate either at the wet end of a paper/board production line, or through surface sizing, or through coating, or through spraying, or through dusting in said line, optionally combined by adding one or more fillers, and optionally other functional chemicals such as strength additives, UV absorbents, hydrophobic agents, retention chemicals, biocides and nutrients.

9. A method according to either of claims 6 or 8, wherein the cellulose carbamate is added in the form of cellulose carbamate fibers, preferably with a fiber length less than about 100 mm, most preferred less than about 50 mm.

10. A method according to either of claims 6 or 8 wherein the cellulose carbamate is added in the form of a film.

11. A method according to either of claims 6 or 8 wherein spun fibers of regenerated cellulose carbamate are added as a reinforcement fiber or thread in the mulch.

12. Use of cellulose carbamate in a mulch, preferably as set out in any one of claims 1 - 5.

13. Use of a mulch according to any one of claims 1 - 5 in cultivation.

## Patentansprüche

1. Bodenbedeckender Mulch, welcher ein Papiersubstrat beinhaltet, das aus Pflanzenfasern enthaltender Pulpe stammt, die zu Bahnen ausgebildet wurde, **dadurch gekennzeichnet, dass** er zudem ein Zellulosecarbamat umfasst.

2. Mulch nach Anspruch 1, der zusätzlich einen oder mehrere Füllstoffe enthält, wie etwa einen Rußfüllstoff, bevorzugt Ruß, besonders bevorzugt in Kombination mit einem Füllstoff, der aus der Gruppe ausgewählt wird, die Calciumcarbonat, Flugasche, Talk, Kaolin, ausgefälltes Carbonat, Silizium und Aluminiumoxide umfasst.

3. Mulch nach Anspruch 1 oder 2, wobei das Zellulosecarbamat in Form eines durchgängigen oder nicht durchgängigen Films, von Partikeln oder einer Faser vorliegt, bei Vorliegen in Faserform bevorzugt mit einer Faserlänge von unter etwa 100 mm, besonders bevorzugt von unter etwa 50 mm.

4. Mulch nach Anspruch 3, wobei das Zellulosecarbamat zudem fibrilliert ist.

5. Mulch nach Anspruch 2, wobei der Ruß aus einer nicht-fossilen Quelle stammt, bevorzugt aus Biomasse oder organischen Abfällen nicht-fossilen Ursprungs.

6. Verfahren zur Herstellung eines Mulchs nach einem der vorhergehenden Ansprüche 1-5, die folgenden Schritte umfassend:
a) Bereitstellen eines Papiersubstrats, das aus Pflanzenfasern enthaltender Pulpe stammt, die zu Bahnen ausgebildet wurde, und
b) Aufbringen von Zellulosecarbamat auf dieses Papier, optional nach einem Schritt des Hinzufügens eines Füllstoffes, der bereits während des Bahnbildungsprozesses erfolgen kann.

7. Verfahren zur Herstellung eines Mulchs nach Anspruch 6, wobei die Fasern enthaltende Pulpe, welche zu Bahnen ausgebildet wurde, mit einem Trocken- oder einem nassgelegten Prozess hergestellt wurde, bevorzugt einem nassgelegten Prozess, bei dem das Zellulosecarbamat hinzugefügt wurde.

8. Verfahren zur Herstellung eines Mulchs nach einem der vorhergehenden Ansprüche 1-5, die folgenden Schritte umfassend:
c) Bereitstellen einer nie getrockneten Pulpe oder einer getrockneten Pulpe und
d) Hinzufügen von Zellulosecarbamat entweder am nassen Ende einer Papier-/Kartonproduktionslinie oder durch Oberflächenleimung oder durch Beschichten oder durch Aufsprühen oder durch Aufstäuben in dieser Linie, optional in Kombination mit dem Hinzufügen eines oder mehrerer Füllstoffe und optional anderer Funktionschemikalien wie etwa Festigkeitsadditiven, UV-Absorptionsmitteln, Hydrophobierungsmitteln, Retentionschemikalien, Bioziden und Nährstoffen.

9. Verfahren nach Anspruch 6 oder 8, wobei das Zellulosecarbamat in Form von Zellulosecarbamatfasern hinzugefügt wird, bevorzugt mit einer Faserlänge von unter etwa 100 mm, besonders bevorzugt von unter etwa 50 mm.

10. Verfahren nach einem der Ansprüche 6 oder 8, wobei das Zellulosecarbamat in Form eines Films hinzugefügt wird.

11. Verfahren nach einem der Ansprüche 6 oder 8, wobei gesponnene Fasern regenerierten Zellulosecarbamats als Verstärkungsfasern oder Strang zu dem Mulch hinzugefügt werden.

12. Verwendung von Zellulosecarbamat in einem Mulch, bevorzugt wie in einem der Ansprüche 1-5 beschrieben.

13. Verwendung eines Mulchs nach einem der Ansprüche 1-5 bei der Bodenbearbeitung.

## Revendications

1. Paillis de revêtement du sol qui comprend un substrat en papier provenant de la pulpe de fibres végétales qui a été formée en toile, **caractérisé en ce qu'**il comprend également un carbamate de cellulose.

2. Paillis selon la revendication 1 contenant en outre un ou plusieurs remplissages, comme un remplissage noir, de préférence noir de carbone, le plus préféré combiné à un remplissage choisi dans le groupe comprenant du carbonate de calcium, des cendres de mouche, du talc, du kaolin, du carbonate précipité, de la silice et des oxydes d'aluminium.

3. Paillis selon la revendication 1 ou 2, dans lequel le carbamate de cellulose est présent sous la forme d'un film continu ou discontinu, de particules ou d'une fibre, de préférence lorsqu'il est sous forme de fibre avec une longueur de fibre inférieure à environ 100 mm, le plus préféré moins d'environ 50 mm.

4. Paillis selon la revendication 3, dans lequel le carbamate de cellulose est également fibrillé.

5. Procédé selon la revendication 2, dans lequel le noir de carbone émane d'une source non fossile, de préférence de la biomasse ou des résidus de déchets organiques d'origine non fossile.

6. Procédé destiné à la fabrication d'un paillis selon l'une quelconque des revendications précédentes 1 à 5, comprenant les étapes suivantes :
a) la fourniture d'un substrat en papier provenant de la pulpe de fibre végétale qui a été formée en toile, et
b) l'application sur ledit substrat de papier carbamate de cellulose, facultativement précédé d'une étape de l'addition de remplissage, qui peut déjà être dans le processus de formation de la toile.

7. Procédé de fabrication d'un paillis selon la revendication 6, dans lequel la pulpe de fibres végétales qui a été formée en toile, a été fabriquée suivant un procédé sec ou humide, de préférence un procédé humide au cours duquel le carbamate de cellulose a été ajouté.

8. Procédé destiné à la fabrication d'un paillis selon l'une quelconque des revendications précédentes 1 à 5 comprenant les étapes suivantes :
c) la fourniture d'une pulpe jamais séchée ou une pulpe séchée, et
d) l'ajout de carbamate de cellulose soit à l'extrémité humide d'une ligne de production de papier/carton, soit par le biais d'une taille de surface, soit par le biais d'un revêtement, ou par pulvérisation, ou encore par le dépoussiérage dans ladite ligne, facultativement combinée en ajoutant un ou plusieurs remplissages, et éventuellement d'autres produits chimiques fonctionnels tels que des additifs de résistance, des absorbants UV, des agents hydrophobes, des produits chimiques de rétention, des biocides et des nutriments.

9. Procédé selon l'une quelconque des revendications 6 ou 8, dans lequel le carbamate de cellulose est ajouté sous forme de fibres carbamate de cellulose, de préférence avec une longueur de fibre inférieure à environ 100 mm, le plus préféré moins d'environ 50 mm.

10. Procédé selon l'une quelconque des revendications 6 ou 8, dans lequel le carbamate de cellulose est ajouté sous la forme d'un film.

11. Procédé selon l'une quelconque des revendications 6 ou 8, dans lequel les fibres filées de carbamate de cellulose régénérée sont ajoutées comme fibre de renforcement ou filetage dans le paillis.

12. Utilisation de carbamate de cellulose dans un paillis, de préférence selon l'une quelconque des revendications 1 à 5.

13. Utilisation d'un paillis selon l'une quelconque des revendications 1 à 5 dans la culture.
